# EUROPEAN PATENT APPLICATION

(11) **EP 1 321 847 A1**
(43) Date of publication of application: **25.06.2003**
(21) Application number: 01970188.7
(22) Date of filing: 21.09.2001
(51) Int. Cl.: G06F 3/02

(54) **TEXT COMMUNICATION DEVICE**

(30) Priority: 21.09.2000 JP 2000287722
(71) Applicant: Sega Corporation, Ohta-ku, Tokyo 144-0043 (JP)
(72) Inventor: MORIMOTO, Kenjiro, c/o Sonicteam, Ltd., Tokyo 144-0043 (JP); MIYOSHI, Takao, c/o Sonicteam, Ltd., Tokyo 144-0043 (JP)
(74) Representative: Brown, Kenneth Richard
(86) International application number: JP0108249
(87) International publication number: WO02025419

(57) **Abstract**

Provided is a text communication device enabling the enjoyment of chatting in a game space such that a dialog according to the personality of the game character is output. In a text communication device connected to a network and capable of communicating at least by text, the selection of terms corresponding to the character and prompt delivery of messages are sought by sorting a group of candidate terms prepared in advance for the communication of messages pursuant to the attribute of the character to be the subject of the conversation, and selecting terms for chatting therefrom. The communication between different languages is also facilitated.

## Description

### 1. Field of the Invention

The present invention generally relates to a text (or a character) communication device for conducting text (or character) communication, and particularly relates to a text (or a character) communication device suitable for utilization in network-compatible games and the like enabling players of different languages to participate in games.

### 2. Description of the Related Art

In a so-called network game wherein the game space is shared by connecting game terminal devices to a communication network such as the Internet or phone line and a plurality of players enjoy the game, communication among the players (or between the player and host computer (game server)) is one factor that adds to the amusement of the game. In an RPG game, for example, communication among players is required in order to exchange items and information to be used by the leading character in the game or to defeat a tough enemy through collaboration. Thus, as the communication means among players, for instance, used is the text communication device disclosed in Japanese Patent Application No. Hei 9-307537. This text communication device is used by being built in the game device to be connected to the network, and, for example, creates Japanese sentences and transmits the same pursuant to the player selecting from a plurality of candidate terms displayed on the screen. Moreover, communication between different languages is conducted via a message card to which a fixed sentence is indicated, and by referring to the message conversion table for the translation of the fixed sentence among a plurality of foreign languages, including Japanese.

In the aforementioned example, although it is possible for the Japanese language player and the foreign language player to communicate pursuant to a message card inscribed with a fixed sentence, communication with foreigners may be further facilitated by forming messages more freely as a result of combining terms and converting such messages into the foreign language of the other player. Further, it would be possible to enjoy the game in an international environment with foreigners as one's game partner.

Nevertheless, since European languages (German, French, Spanish, etc.) have a complex linguistic usage unlike English, a proper translation cannot be obtained by merely exchanging the words.

Furthermore, although the language (language displayed on the screen) spoken by the main game character operated by the player is usually the same as the other characters, it would be realistic and amusing if the expressions (dialogs) used by the game characters differ pursuant to the personality of such characters.

Thus, an object of the present invention is to provide a text communication device capable of converting languages even if the prepared sentence is of a European language.

Another object of the present invention is to provide a text communication device wherein the usage of terms is selected pursuant to the game character.

A further object of the present invention is to provide a text communication device wherein the attribute of the game character is prescribed, and the usage of terms is selected by using such attribute.

Still a further object of the present invention is to provide a game device comprising the aforementioned text communication device.

### SUMMARY OF THE INVENTION

In order to achieve the objects described above, the text communication device according to the present invention which at least communicates messages by text with the opponent's communication device connected to a network comprises: storage means for storing a group of candidate terms prepared in advance for message communication and defining and storing in advance attributes capable of being the subject among the candidate terms; transmission/reception means for communicating with the opponent' s communication device via the network; display means for displaying the group of candidate terms prepared for message communication on the screen of a screen indicator; term selection means for selecting the candidate term displayed on the screen in accordance with operations; predicate selection means for selecting a plurality of candidate terms corresponding to an attribute when the selected candidate term has the attribute and displaying the plurality of candidate terms on the screen of the indicator; and editing means for sending the selected candidate terms to the transmission/reception means.

According to this structure, based on the attribute of the selected term, it is possible to select the term to be selected next among the group of terms that is more relevant to the character.

Preferably, the terms include subject, predicate, noun, verb, object and complement.

Preferably, the opponent' s communication device is a host computer system which executes a program of a communicative game for deploying a game in response to the access from a plurality of game terminal devices comprising the text communication function, or a communication device operated by a participant in the communicative game.

Preferably, the subject is the name of the game character or game player. It is thereby possible to select terms matching the game character and to enjoy the game conversation.

Preferably, the attribute includes at least the personality or gender of the game character.

Preferably, the text communication device selects one among a predicative noun, verb, object, complement or fixed sentence based on the gender.

According to this structure, it is possible to improve the selection efficiency in consideration of the change in gender (male, female, neutral) in European languages.

Preferably, the text communication device selects one among a predicative noun, verb, object, complement or fixed sentence upon converting the terms of different languages based on the gender.

It is thereby possible to make a selection in consideration of the change in gender (male, female, neutral) upon converting a European language to a different language.

Further, the communicative game device according to the present invention which at least communicates messages by text with the opponent' s communication device connected to a network comprises: storage means for storing a group of candidate terms prepared in advance for message communication and defining and storing in advance attributes capable of being the subject among the candidate terms; transmission/reception means for communicating with the opponent' s communication device via the network; candidate display means for displaying the group of candidate terms prepared for message communication on the screen of a screen indicator; term selection means for selecting the candidate term displayed on the screen in accordance with operations; predicate selection means for selecting a plurality of candidate terms corresponding to an attribute when the selected candidate term has the attribute and displaying the plurality of candidate terms on the screen of the indicator; and editing means for sending the selected candidate term to the transmission/reception means.

According to this structure, it is possible to obtain a game device having a chat function with improved selection efficiency pursuant to text attributes.

Preferably, the candidate display means and/or the predicate selection means selects a group of candidate terms to be displayed on the screen of the indicator in correspondence with the game scene.

Preferably, the screen of the indicator is a game screen. It is thereby possible to simultaneously view the game development and chat screen.

### BRIEF DESCRIPTION OF THE DRAWINGS

Fig. 1 is an explanatory diagram for explaining the message-creating screen of the text communication device;
Fig. 2 is a block diagram for explaining the overall structure of the communication network;
Fig. 3 is a block diagram for explaining an example of the game device having a communication function;
Fig. 4 is a flowchart for explaining the message creation in the text communication device;
Fig. 5 is an explanatory diagram for explaining an example of a term (name) table;
Fig. 6(a) is an explanatory diagram for explaining an example of a term table presented when the attribute of the character is "tough"; Fig. 6(b) is an explanatory diagram for explaining an example of a term table presented when the attribute of the character is "weak"; and Fig. 6(c) is an explanatory diagram for explaining an example of a term table presented when the attribute of the character is "cool";
Fig. 7(a) is an explanatory diagram for explaining an example of a term table presented when the attribute of the character is "male"; and Fig. 7(b) is an explanatory diagram for explaining an example of a term table presented when the attribute of the character is "female";
Fig. 8 is an explanatory diagram for explaining an example of a table in which the term presented by the gender of the subject is selected;
Fig. 9 is an explanatory diagram for explaining an example of a message displayed in the speech balloon of a tough character;
Fig. 10 is an explanatory diagram for explaining an example of a message displayed in the speech balloon of a weak character;
Fig. 11 is an explanatory diagram for explaining an example of a message displayed in the speech balloon of a male character;
Fig. 12 is an explanatory diagram for explaining an example of a message displayed in the speech balloon of a female character;
Fig. 13 is an explanatory diagram for explaining an example of selecting European terms based on the attribute of the character;
Fig. 14 is an explanatory diagram for explaining a Japanese message displayed in the speech balloon of a male character;
Fig. 15 is an explanatory diagram for explaining an example of a Spanish message displayed in the speech balloon of a male character;
Fig. 16 is an explanatory diagram for explaining an example of a Spanish message displayed in the speech balloon of a female character; and
Fig. 17 is an explanatory diagram for explaining an example of a Japanese message displayed in the speech balloon of a female character.

### DESCRIPTION OF THE PREFERRED EMBODIMENTS

The first embodiment of the present invention is now explained with reference to the attached drawings.

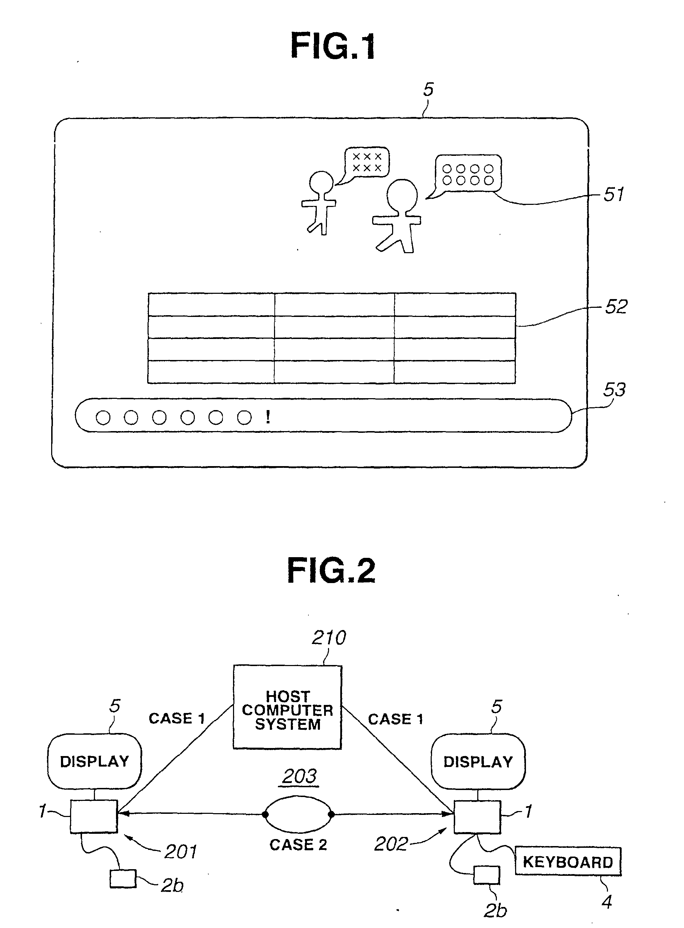

Fig. 2 is an overall block diagram showing the outline of the communication system according to the present invention. Fig. 2 shows a case where communication terminal devices 201 and 202 capable of text communication are directly connected via a network 203 and a case where terminal devices 201 and 202 are indirectly connected via a host computer 210. The network 203 includes a public network, dedicated line, Internet, LAN, and so on. The host computer 210 comprises a data processing/conversion function and is connected to the terminal devices 201 and 202 via the aforementioned network 203. This data processing may include the host function in a communicative game. Here, the host computer provides as the game server event information, map information, game parameters, coordinate : movement information, character status information, and the like. A plurality of terminal devices may be connected to the network 203, and includes those disposed overseas as well as domestically.

In addition to communication-dedicated devices, the terminal device includes personal computers and game devices comprising a communication function. The terminal device comprises at least a main body, display and input device.

As described later, for example, the terminal device can be realized with a domestic game device. Here, the game device comprises a game device body 1, and a game controller 2 (a control pad for instance) as the game input device.

Although the terminal device 202 may also be realized with the foregoing structure, in-the embodiments, it further comprises a keyboard 4. Nevertheless, the keyboard 4 is not a requisite item in the present invention.

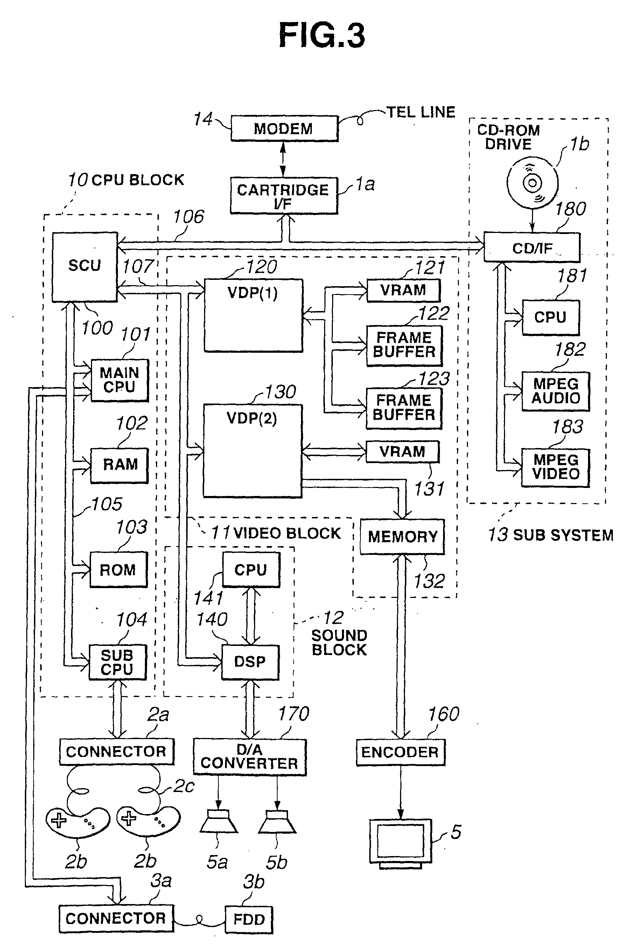

Fig. 3 shows an example of the communication terminal 201 or 202, and a game device comprising a modem is being employed. This game device is capable of being used as a terminal device of the network and conducting a so-called communicative game.

This game device is structured of a CPU block 10 for controlling the overall device, a video block 11 for controlling the display of the game screen, a sound block 12 for generating sound effects and the like, a subsystem 13 for reading from a CD-ROM, and a modem 14 for conducting external data communication.

The CPU block 10 is structured of a SCU (System Control Unit) 100, a main CPU 101, a RAM 102, a ROM 103, a cartridge I/F 1a for connecting the modem or the like, a sub CPU 104, and a CPU bus 105. The main CPU 101 is for controlling the overall device. This CPU 101 internally comprises the same operational function as a DSP (Digital Signal Processor) and is capable of executing application software at high speeds. Moreover, the main CPU 101 automatically recognizes the type of peripheral (FDD 3b in Fig. 3) connected to the connector 3a and conducts data communication with such peripheral. Specifically, the peripheral is connected to the SCI built in the CPU 101. Further, connected to the serial connector 3a are the SCI signals of the master SH and slave SH, respectively, and the MIDI in/out from the SCSP (sound DSP). The FDD 3b, for instance, is used for storing the data of the backup memory (for storing various game data and parameters) (not shown) in a floppy disk or for copying the data of the floppy disk in the backup memory.

The RAM 102 is used as the work area of the main CPU 101. Written in the ROM 103 is the initial program for the initialization processing. The SCU 100 is capable of conducting smooth data input/output between the main CPU 101, VDP 120, 130, DSP 140 and CPU 141 by controlling the buses 105, 106 and 107. Further, the SCU 100 has a built-in DMA controller and is capable of transferring the sprite data in the game to the VRAM in the video block 11. It is thereby possible to execute the application software of games or the like at high speeds. The cartridge I/F 1a enables the input of application software supplied in the format of a ROM cartridge (not shown), and further enables the use of a cartridge-type modem 14 for the transmission and reception of data. A so-called communicative game is possible by utilizing a modem. Game parameters and so on are exchanged between the game server and CPU 102.

The sub CPU 104 is referred to as an SMPC (System Manager & Peripheral Control) and comprises a function of collecting peripheral data from the pad 2b via a connector 2a in accordance with the request from the main CPU 101. The main CPU 101 performs processing for moving the attack aircraft in the game screen, for example, based on the peripheral data received from the sub CPU 104. Connected to the connector 2a may be an arbitrary peripheral among a pad, joystick or keyboard. The sub CPU 104 automatically recognizes the type of peripheral connected to the connector 2a (main body side terminal) and comprises a function of collecting peripheral data and the like based on the communication method according to the type of peripheral.

The video block 11 comprises a VDP (Video Display Processor) 120 for drawing characters and the like from polygon data of a video game, and a VDP 130 for drawing background screens, synthesizing polygon image data and background screens, and conducting clipping processing. The VDP 120 is connected to the VRAM 112 and the frame buffers 122, 123. The drawing data of polygons representing the characters of the video game device is sent to the VDP 120 from the main CPU 101 via the SCU 100, and written in the VRAM 121. The drawing data written in the VRAM 121 is, for example, drawn in the frame buffer 122 or 123 for drawing in a 16 bit or 8 bit/pixel format. Data of the drawn frame buffer 122 or 123 is sent to the VDP 130. Information for controlling the drawing is provided from the main CPU 101 to the VDP 120 via the SCU 100. The VDP 120 thereby executes drawing processing pursuant to such instructions.

The VDP 130 is connected to the VRAM 131, and is structured such that the image data output from the VDP 130 is output to an encoder 160 via a memory 132. The encoder 160 generates picture signals by adding synchronization signals to this image data and outputs the result to a TV receiver 5. Various game screens are thereby displayed on the TV receiver 5.

The sound block 12 is structured of a DSP 140 for conducting voice synthesis in accordance with the PCM method or FM method, and a CPU 141 for controlling this DSP 140. The voice data generated with this DSP 140 is output to the speaker 5b after being converted into a 2-channel signal with a D/A converter 170.

The subsystem 13 is structured of a CD-ROM drive 1b, a CD I/F 180, a CPU 181, an MPEG AUDIO 182, and an MPEG VIDEO 183. This subsystem 13 comprises a function of reading the application software supplied in a CD-RON format and reproducing animation. The CD-ROM drive 1b is for reading the data from the CD-ROM. The CPU 181 is for performing the processing of controlling the CD-ROM drive 1b and correcting the errors in the read data. Data read from the CD-ROM is supplied to the main CPU 101 via the CD I/F 180, bus 106 and SCU 100 and used as application software. Moreover, the MPEG AUDIO 182 and MPEG VIDEO 183 are devices for restoring data compressed with the MPEG (Motion Picture Expert Group) standard. The reproduction of animation is possible by restoring the MPEG-compressed data written in the CD-ROM with such MPEG AUDIO 182 and MPEG VIDEO 183.

According to this structure, upon playing a communicative game, for example, each game device retains information on graphic data including font data, sound data, tutorial map, and mail correspondence (backup RAM). The CD-ROM, for instance, supplies graphic data and the like. Further, the server side, for example, retains map data, event data (message data and the like), monster parameters, various parameter data, and backup information. Basically, the game device side retains graphic information and the server side retains the data group including the parameters. The server side manages all parameters and map information, and the game device side receives information on the results thereof and technically processes the screen display. A game with new contents may be provided without having to exchange the CD-ROM by the server operating the map data and parameters. Moreover, new types of monsters may be made to appear in correspondence with the increase in the player's abilities by retaining the game parameters (strength of the characters) on the server side.

In a communicative game, partners for playing the game may be obtained through a network. For example, in a network RPG (Role Playing Game), a plurality of players in different locations may form a party in a virtual game space. And the individual characters, which are the players' double, may be respectively controlled in the virtual game space. Here, the communication between players is essential. For instance, it will become necessary to speak with a person that the player is meeting for the first time, discuss the destination with other adventurers, and confer on the strategy during the battle. A chat function (a real-time communication system by text) is thereby provided. Further, if the opponent is logged in the server, a telegram function is prepared for sending messages to the specific person (opponent) regardless of the place or status of the player himself/herself or the opponent. This is effective when contacting friends and acquaintances. In addition, it is also possible to provide a bulletin board as a communication means blending with the game world or a letter transmission means for sending letters to a specific opponent.

A keyboard for inputting text is generally used for the aforementioned chat function or telegram function. Nevertheless, a keyboard is usually an optional item in a game device, and is not included as a standard item together with the game device itself. Thus, a text input interface is used for punching the keyboard. Needless to say, the input device is not limited to the game pad.

The text input interface (text input device) is now explained with reference to Figs. 1 through 4.

Provided to the control pad 2b are, for example, the respective switches of buttons A, B, C, X, Y, Z, L and R, and the cross-shaped key. Prescribed functions are assigned to the respective buttons in the text input mode for chat and the like. For example, decision of category and word is assigned to button A, cancellation of words of the decided category is assigned to button B, switching of the display page (advancing to the next page) of categories and words is assigned to trigger L, switching of the display page (returning to the previous page) of categories and words is assigned to trigger R, switching of the chat mode (soft keyboard, word select, symbol chat) is assigned to button X, on/off of the chat mode is assigned to button Y, and the selection of categories and words is assigned to the cross-shaped key.

Fig. 1 shows an example of a chat screen. The appearance of the game field is reflected on the game screen of the display 5, and displayed are a speech balloon (communication content display area) 51 in the vicinity of the characters for displaying the contents of the conversation of the characters, a window (candidate term display area) 52 for displaying the table in which the terms to be selected have been sorted, and an editing window (message editing area) 53 for editing messages.

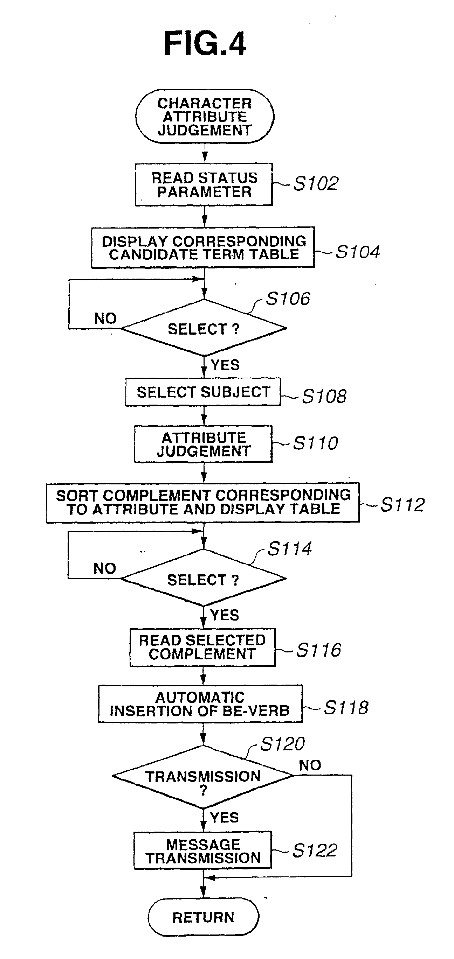

The main CPU 101 executes the program (chat algorithm pursuant to character attribute judgment) shown in Fig. 4 when it judges that a flag for conducting a chat has been set during the execution of the main program.

In a party organization mode, for example, if a player presses the Y button of the pad 2b during the scene of soliciting participation to a prescribed team, in a state where the game guidance screen is displayed, or during the scene of discussion or information exchange in a lounge or bar where it is possible to gather partners, the chat mode is designated and the flag is set. The exchange of messages is possible thereby and the members of the party may discuss various issues.

The CPU 101 reads the parameter (status parameter) representing the current status (scene, for example) among the game parameters (step S102). As the current status, considered may be the participation in a party, telegram transmission, letter transmission, perusal of guidance screen, conversation in a bar, strategy meeting prior to battle, meeting on the selection of adventure course, battle scene, rescue-requesting scene, among others. A group of terms corresponding to the current status is read from the database recorded on the CD-ROM and sorted, and displayed on the candidate selection table 52 (S104). In addition, the group of terms may also be downloaded from the game server.

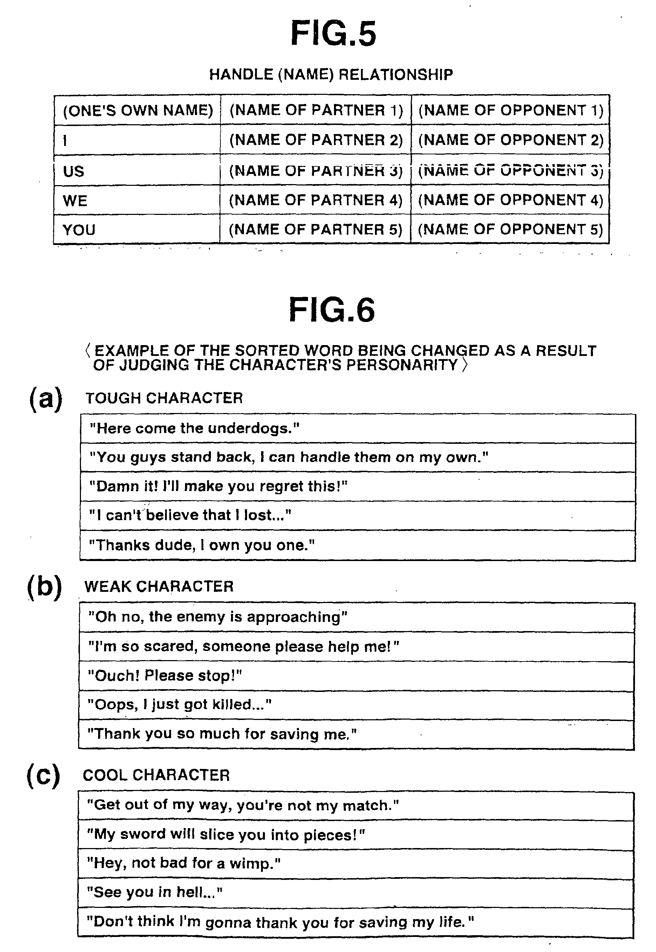

Fig. 5 shows the terms related to names displayed on the candidate selection table 52, and registered are game characters, personal pronouns, names of party participants, and names of communication opponents. In the respective scenes of the game space, attributes are defined to each selectable subject (game character) . Included in the attributes are gender (male, female, neutral) and personality (tough, weak, generous, good guy, bad guy, cool, gangster, etc.). Moreover, when participating in a game with the player's name, attributes may be defined to the registered player name. A flag is set when the player operates the control pad and selects a subject. When the CPU 101 judges this (S106), it reads the selected subject (S108) and distinguishes the subject and the attribute thereof.

The CPU 101 thereafter displays the table in which the terms corresponding to the current game status (or game scene) and the character attribute have been collected and sorted as the candidate selection table 52.

For example, in a scene where the character encounters an enemy, if the character attribute is "tough" (tenacious character), as shown in Fig. 6(a), dialogs corresponding to a tough personality are presented. In a scene where the character encounters an enemy, if the character attribute is "weak" (flaccid character), as shown in Fig. 6(b), dialogs corresponding to a weak personality are presented. Moreover, in a scene where the character encounters an enemy, if the character attribute is "cool" (weak character), as shown in Fig. 6(c), dialogs corresponding to a weak personality are presented.

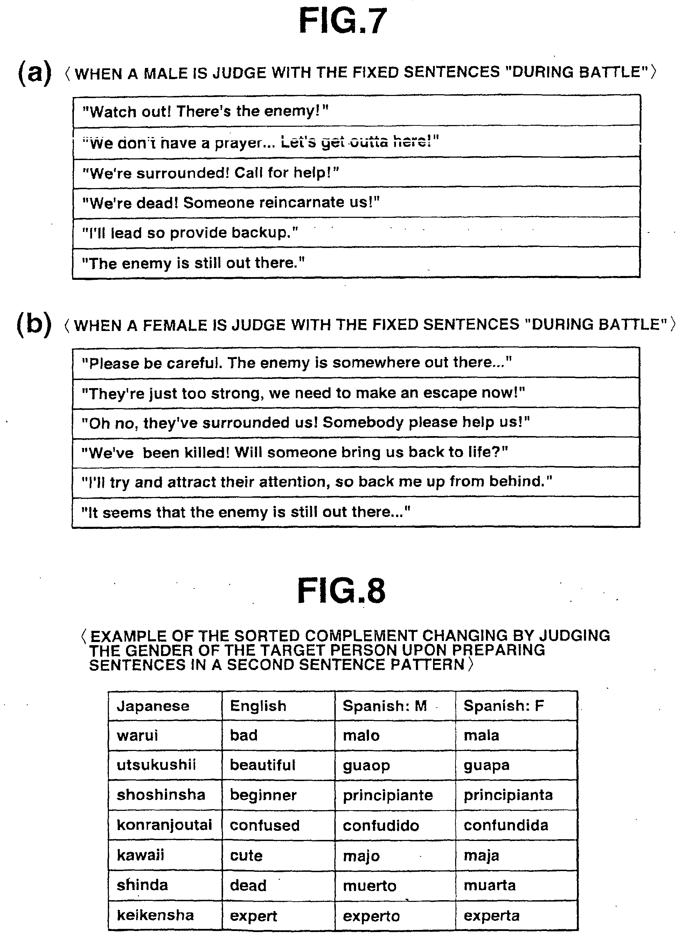

Fig. 7(a) shows a presentation example of terms when the character attribute is "male" in a battle scene. Fig. 7(b) shows a presentation example of terms when the character attribute is "female" in the same scene.

With the character (subject) attributes of male, female and neutral, as shown in Fig. 8, the complement selected, sorted and displayed in accordance with the scene changes pursuant to the gender of the subject when the language of the chat partner is of a European language (those in which the terms to be selected change pursuant to the gender of the subject). Further, the translation between different languages may be conducted on either the transmission side or the reception side, or the game server may perform such translation.

A flag is set when the player selects a term (predicate, complement) from the table 52. When the CPU 101 distinguishes the flag (S114), it reads the selected term (S116). When translating (converting) from Japanese to a foreign language, abe-verb (am, is, are, was, be, etc.) is automatically inserted (for English). As described above, this insertion is not required on the transmission side when the translation is performed on the reception side or on the server side (S118).

The term selected by the player is displayed in the editing window 53 on the screen. Revisions, changes and keyboard input are possible in the editing window 53 pursuant to the editor function. The term displayed in the editing window 53 is sent to the transmission/reception means of the game device. When the player wishes to send the selected term to the opponent character (player), he/she operates the control pad and instructs transmission, or instructs cancellation when the term is not to be transmitted. Flags are set in accordance with the above. When the CPU 101 distinguishes the transmission (S120; Yes), it sends the message to the game server. The game server then transmits the message (selected term, sentence) to the opponent character (S122). After transmission and when the transmission is not made (S120; No), it returns to the original mode. Moreover, a mode may also be provided for directly transmitting to the terminal device of the other party without going through the server.

The transmitted message and the message received from the other party are stored in the RAM 102, and are displayed as the speech balloon 51 of the respective characters displayed on one's own screen and the opponent's screen pursuant to a communication display program. It is thereby possible for the characters to enjoy the feeling of conversation.

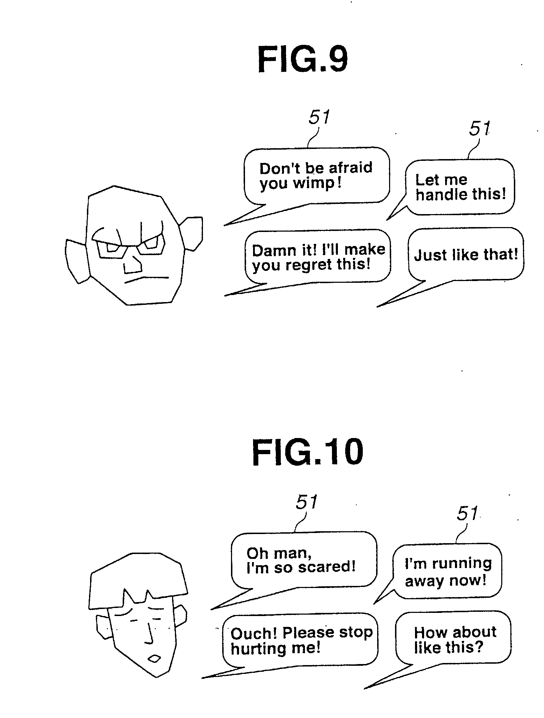

Fig. 9 shows an example of the conversation (chat) displayed on the screen of the indicator as the speech balloon of a character with a "tough" personality. Although a plurality of speech balloons 51 are exemplified in Fig. 9, only one speech balloon is ordinarily displayed.

Fig. 10 shows an example of the conversation (chat) displayed on the screen of the indicator as the speech balloon of a character with a "weak" personality. Although a plurality of speech balloons 51 are exemplified in Fig. 10, only one speech balloon is ordinarily displayed.

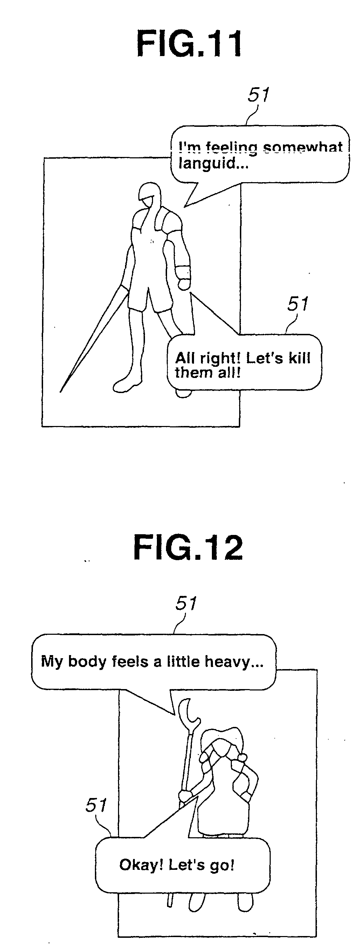

Figs. 11 and 12 show examples of messages (male expression and female expression with the same meaning) when the character is a male and female, respectively. Although a plurality of speech balloons 51 are exemplified in Figs. 11 and 12 also, only one speech balloon is ordinarily displayed.

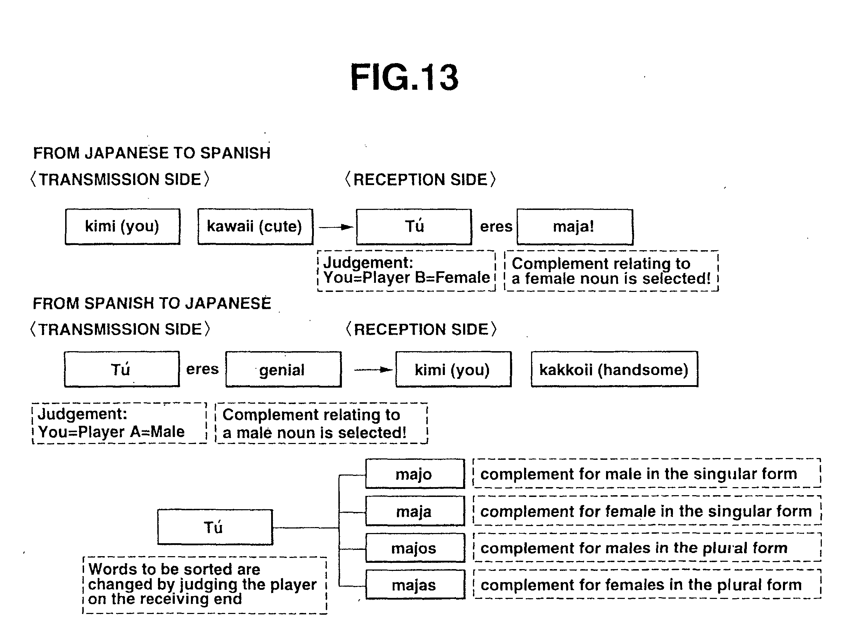

Fig. 13 shows a conversion example of a Japanese message and a European language message (Spanish in this example) with the character attribute of male, female and neutral.

When the transmission side transmits the message of "*kimi* (you)" "*kawaii* (cute)" in Japanese, the reception side judges "*kimi*" as an attribute of "Player B" = female, and converts this into "Tú". The "be-verb" is converted into "eres" in correspondence therewith. Moreover, "*kawaii*" is converted into "maja". The terms to be sorted are changed by judging the attribute of the player on the receiving end. For example, "majo" (male singular) , "maja" (female singular) , "majos (male plural) and "majas" (female plural) correspond to "*kawaii*", and selected in accordance with the attribute of the subject.

When the transmission side transmits the message of "Tú" "eres" "genial" in Spanish, the reception side judges "Tú (you)" as an attribute of "Player A" = male, and converts this into "*kimi* (you)". The term "genial" is converted into "*kakkoii* (handsome)" in correspondence therewith. The "be-verb" is deleted.

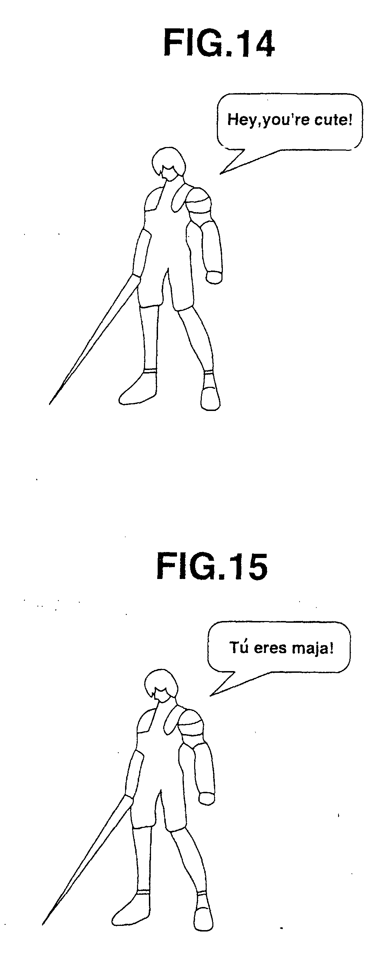

Fig. 14 shows a case where the message of the male character on the transmission side is displayed in "Japanese" on the screen of the indicator on the transmission side, and Fig. 15 shows a case where the message is displayed in "Spanish" on the screen of the indicator on the reception side. Further, when the position of players (characters) A and B differ in the game space, the status of the screen will not necessarily be displayed the same since they will have different viewpoints.

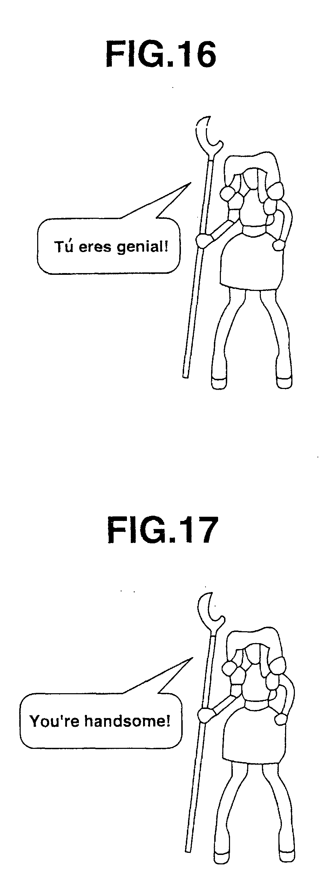

Fig. 16 shows a case where the message of the female character on the transmission side is displayed in "Spanish" on the screen of the indicator, and Fig. 17 shows a case where the message is displayed in "Japanese" on the screen of the indicator on the reception side.

As described above, terms may be selected by viewing the attribute of the character (subject) and sorting the term table corresponding thereto. When the player sequentially selects prescribed terms from the term table with the pad 2b, a message is formed by the selected terms being assembled. Conversation with text is realized by transmitting such message.

Although the subject is often omitted in the usage (conversation, etc.) of Japanese, it is possible to determine the gender (attribute) of the subject in the usage of the term in such a case. It is also possible to extract selectable terms from the database pursuant to such determination and sort them in a table.

In the aforementioned embodiments, although data communication by text is conducted between a terminal device (game device) and a host computer system (game server), the host computer system (game device) may comprise a database of a set of terms and send the corresponding set of terms to the terminal device. Moreover, data communication by text may also be conducted between terminal devices without going through the host computer. Here, similar to the communication with the host, text may be input by selecting terms from a table, and communication may thereby be conducted by forming messages.

As described above, as the text communication device of the present invention defines an attribute to the character and selects terms by referring to such attribute, this is preferable in that a group of terms more relevant to the scene may be presented on the table. Foreign language compatibility is also facilitated.

## Claims

1. A text communication device which at least communicates messages by text with the opponent's communication device connected to a network, comprising:
storage means for storing a group of candidate terms prepared in advance for said message communication and defining and storing in advance attributes capable of being the subject among said candidate terms;
transmission/reception means for communicating with said opponent's communication device via said network;
display means for displaying said group of candidate terms prepared for said message communication on the screen of a screen indicator;
term selection means for selecting the candidate term displayed on said screen in accordance with operations;
predicate selection means for selecting a plurality of candidate terms corresponding to an attribute when the selected candidate term has said attribute and displaying said plurality of candidate terms on the screen of said indicator; and
editing means for sending the selected candidate terms to said transmission/reception means.

2. A text communication device according to claim 1, wherein said terms include subject, predicate, noun, verb, object and complement.

3. A text communication device according to claim 1, wherein said opponent's communication device is a host computer system which executes a program of a communicative game for deploying a game in response to the access from a plurality of game terminal devices comprising the text communication function, or a communication device operated by a participant in said communicative game.

4. A text communication device according to claim 1, wherein said subject is the name of the game character or game player.

5. A text communication device according to claim 1, wherein said attribute includes at least the personality or gender of the game character.

6. A text communication device according to claim 5, which selects one among a predicative noun, verb, object, complement or fixed sentence based on said gender.

7. A text communication device according to claim 5, which selects one among a predicative noun, verb, object, complement or fixed sentence upon converting the terms of different languages based on said gender.

8. A communicative game device which at least communicates messages by text with the opponent's communication device connected to a network, comprising:
storage means for storing a group of candidate terms prepared in advance for saidmessage communication and defining and storing in advance attributes capable of being the subject among said candidate terms;
transmission/reception means for communicating with said opponent's communication device via said network;
candidate display means for displaying said group of candidate terms prepared for said message communication on the screen of a screen indicator;
term selection means for selecting the candidate term displayed on said screen in accordance with operations;
predicate selection means for selecting a plurality of candidate terms corresponding to an attribute when the selected candidate term has said attribute and displaying said plurality of candidate terms on the screen of said indicator; and
editing means for sending the selected candidate terms to said transmission/reception means.

9. A game device according to claim8, wherein said candidate display means and/or said predicate selection means selects a group of candidate terms to be displayed on the screen of said indicator in correspondence with the game scene.

10. A game device according to claim 8, wherein the screen of said indicator is a game screen.

## Amended claims

### Amended claims under Art. 19.1 PCT

**1.** (Amended) A text communication device which at least communicates messages by text with the opponent's communication device connected to a network, comprising:
storage means for storing a plurality of terms prepared in advance for said message communication and defining and storing in advance attributes capable of being the subject among said plurality of terms;
transmission/reception means for communicating with said opponent's communication device via said network;
first term display means for reading the plurality of terms prepared for said message communication from said storage means and displaying said plurality of terms on a screen indicator;
first selection means for selecting the term displayed on said screen indicator pursuant to said first term display means in accordance with input operations;
second term display means for reading from said storage means a plurality of terms corresponding to an attribute when the selected term has said attribute and displaying said plurality of terms on said screen indicator;
second selection means for selecting the term displayed on said screen indicator pursuant to said second term display means in accordance with input operations; and
editing means for sending the each of the selected terms to said transmission/reception means.

**2.** A text communication device according to claim 1, wherein said terms include subject, predicate, noun, verb, object and complement.

**3.** A text communication device according to claim 1, wherein said opponent's communication device is a host computer system which executes a program of a communicative game for deploying a game in response to the access from a plurality of game terminal devices comprising the text communication function, or a communication device operated by a participant in said communicative game.

**4.** A text communication device according to claim 1, wherein said subject is the name of the game character or game player.

**5.** A text communication device according to claim 1, wherein said attribute includes at least the personality or gender of the game character.

**6.** A text communication device according to claim 5, which selects one among a predicative noun, verb, object, complement or fixed sentence based on said gender.

**7.** A text communication device according to claim 5, which selects one among a predicative noun, verb, object, complement or fixed sentence upon converting the terms of different languages based on said gender.

**8.** (Amended) A communicative game device which at least communicates messages by text with the opponent's game device connected to a network, comprising:
storage means for storing a plurality of terms prepared in advance for said message communication and defining and storing in advance attributes capable of being the subject among said plurality of terms;
transmission/reception means for communicating with said opponent's game device via said network;
first term display means for reading the plurality of terms prepared for said message communication from said storage means and displaying said plurality of terms on a screen indicator;
first selection means for selecting the term displayed on said screen indicator pursuant to said first term display means in accordance with input operations;
second term display means for reading from said storage means a plurality of terms corresponding to an attribute when the selected term has said attribute and displaying said plurality of terms on said screen indicator;
second selection means for selecting the term displayed on said screen indicator pursuant to said second term display means in accordance with input operations; and
editing means for sending the each of the selected terms to said transmission/reception means.

**9.** (Amended) A game device according to claim 8, wherein said first and said second term display means displays on said screen indicator a plurality of terms for said message communication prepared in correspondence with the game scene.

**10.** (Amended) A game device according to claim 8, wherein the screen of said screen indicator is a game screen.

**11.** (Added) A text communication method which at least communicates messages by text with the opponent's communication device connected to a network, comprising:
a first step for storing in storage means a plurality of terms prepared in advance for said message communication and defining and storing in advance attributes capable of being the subject among said plurality of terms;
a second step for reading the plurality of terms prepared for said message communication from said storage means and displaying said plurality of terms on a screen indicator;
a third step for selecting a first term among the plurality of terms displayed on said screen indicator in accordance with input operations;
a fourth step for reading from said storage means a plurality of terms corresponding to an attribute when the selected first term has said attribute and displaying said plurality of terms on said screen indicator;
a fifth step for selecting a second term among the plurality of terms displayed on said screen indicator in accordance with input operations; and
a sixth step for sending the selected first and second terms to said opponent's communication device.

**12.** (Added) A text communication method according to claim 11, wherein said terms include subject, predicate, noun, verb, object and complement.

**13.** (Added) A text communication method according to claim 11, wherein said subject is the name of the game character or game player.

**14.** (Added) A text communication method according to claim 11, wherein said attribute includes at least the personality or gender of the game character.

**15.** (Added) A text communication method according to claim 14, which selects one among a predicative noun, verb, object, complement or fixed sentence based on said gender.

**16.** (Added) A text communication method according to claim 14, which selects one among a predicative noun, verb, object, complement or fixed sentence upon converting the terms of different languages based on said gender.

**17.** (Added) A text communication method according to claim 11, wherein said opponent's communication device is a game device, and displays on said screen indicator a plurality of terms for said message communication prepared in correspondence with the game scene.

**18.** (Added) A text communication method according to claim 11, wherein said opponent's communication device is a game device, and the screen of said screen indicator is a game screen.

**19.** (Added) A program for making a computer system execute the text communication method according to claim 11.

**20.** (Added) An information recording medium having recorded thereon an application program for making a computer system execute the text communication method according to claim 11.
